# EUROPÄISCHE PATENTSCHRIFT

(11) **EP 2 894 007 B1**
(45) Veröffentlichungstag und Bekanntmachung des Hinweises auf die Patenterteilung: **03.04.2019**
(21) Anmeldenummer: 15000034.7
(22) Anmeldetag: 09.01.2015
(51) Int. Cl.: B23Q 11/10, B01F 3/00

(54) **Verfahren und Misch-Vorrichtung zum Erzeugen eines mehrphasigen Kühl- und/oder Schmierstoffes für eine Kühlung und/oder Schmierung einer Bearbeitungsvorrichtung**
Method and mixing device for generating a multiphase cooling and/or lubricant material for cooling and/or lubricating a processing device
Procédé et dispositif de mélange pour la production d'une substance de refroidissement et/ou de lubrification multiphases pour un refroidissement et/ou une lubrification d'un dispositif d'usinage

(30) Priorität: 14.01.2014 DE 102014000381
(43) Veröffentlichungstag der Anmeldung: 15.07.2015
(73) Patentinhaber: Nitschke, Steffen, 04720 Döbeln (DE)
(72) Erfinder: Stoll, Andrea, 09127 Chemnitz (DE); Nitschke, Steffen, 04319 Leipzig (DE)
(74) Vertreter: Grünecker Patent- und Rechtsanwälte PartG mbB

(56) Entgegenhaltungen:
- EP-A1- 2 347 855
- WO-A1-03/026843
- WO-A2-2006/065869
- JP-A- H 026 838
- US-A1- 2004 154 985
- US-A1- 2012 237 311

## Beschreibung

Die Erfindung betrifft ein Verfahren und eine Misch-Vorrichtung zur Herstellung eines mehrphasigen Kühl- und/oder Schmierstoffs, sowie eine Bearbeitungsvorrichtung, die die Misch-Vorrichtung aufweist.

Aus dem allgemeinen Stand der Technik ist bekannt, dass bei spanenden oder sonstigen mechanischen Bearbeitungsverfahren, bei denen das zu bearbeitende Material/Werkstück in die vorgesehene Gestalt gebracht wird, in dem überschüssiges Material abgetragen wird, verschiedener Materialien aufgrund mechanischer und thermischer Reibung häufig eine intensive Kühlung und/oder Schmierung benötigt wird.

WO 03/026843 A1 mit dem Titel *"Verfahren und Werkzeug zur Bearbeitung von Werkstücken mit Kühlung"* beschreibt und beansprucht ein Verfahren zur spanenden oder verformenden Bearbeitung von metallischen oder keramischen Werkstücken und ein Werkzeug zur Durchführung des Verfahrens. Hieraus ist bekannt, ein unter Druck stehendes flüssiges CO₂ intern durch ein Werkzeug (1) hindurchzuleiten und in unmittelbarer Nähe der eigentlichen Wirk- öder Bearbeitungsstelle durch Druckabfall auf Umgebungstemperatur zu einem kalten Gas und Schnee enthaltenden Kühlmittelstrom zu expandieren, wobei die Expansion durch eine den Kühlmittelstrahl aus dem Werkzeug leitende Expansionsdüse erfolgt.

US 2012/23 73 11 A1 betrifft ein Verfahren und eine Vorrichtung zur thermischen Kontrolle innerhalb eines Bearbeitungsprozesses und beschreibt ein Verfahren, wobei ein Überdruckgas mit einem konstanten aber relativ hohen Druck mit einem Niedertemperaturfluid (Kühlfluid) vorgesehen wird, um ein dichtes isobares und flüssig (fluid) zuführbares Fluid bereitzustellen, das durch ein rotierendes Werkzeug hindurchgeführt werden kann, ohne dass es zu einer Gelbildung oder Verfestigung desselben im Werkzeug kommt.

WO 2006/06 58 69 A2 beschreibt eine kryogene Fluidverbindung, die aus drei Phasen ausgebildete werden soll, wobei die Fluidverbindung eine Kühlmittelphase (coolant phase Fc), eine Verdünnungsphase (diluent phase Fd) und wahlweise eine Additiv-Phase (additive phase) aufweisen kann.

Ein übermäßiger Einsatz typischer Kühl-Schmierstoffe soll aus wirtschaftlichen und umweltschädlichen Gründen vermieden werden. Für verschiedene Bearbeitungsaufgaben konnten sich die Trockenbearbeitung und die Minimalmengenschmierung als umweltfreundliche Alternativen durchsetzen, haben jedoch die Nachteile, dass die geringe Schmierung und Kühlung insbesondere bei einigen Zerspan-Prozessen, wie beispielsweise bei der Bearbeitung von hochfesten Werkstoffen, wie Titan- und Nickelbasislegierungen, Gusseisen mit Vermikulargraphit und bestimmten hochfesten Stählen, zu einer zu starken Wärmeentwicklung in der Spanbearbeitungszone führt. Die daraus resultierende erhöhte thermische Belastung für Werkzeug, Werkstück und Maschine hat einen negativen Einfluss auf die Werkzeugverschleißverhalten, die Prozesssicherheit und die Bauteilqualität und verhindert insbesondere den Einsatz hocheffizienter Schneidstoffe wie beispielsweise CBN (kubisch kristallines Bornitrid).

Einen Lösungsansatz für diese Ausführung bietet die kryogene Prozesskühlung in Verbindung mit Schmierölen. Die bisherigen, aus dem Stand der Technik bekannten kryogenen Prozesskühlungen, haben jedoch den Nachteil, dass die verwendeten Kühlmedien eine besonders starke Kühlung des Gases erfordern, was sich nachteilig auf das Werkstück und das Werkzeug auswirken kann, da die stark gekühlten Gase zu Sprödrissen in dem Werkzeug und/oder auch den Werkstück führen können.

Aufgabe der Erfindung ist es daher, ein Verfahren und eine Mischvorrichtung bereitzustellen, mit der ein Kühlen und Schmieren, insbesondere ein kyrogenes Kühlen und Schmieren, eines Werkstückes und eines Werkzeuges möglich ist, ohne dass das Werkzeug und Werkstück durch den Kühl-Schmier-Prozess negativ beeinflusst werden. Es soll ferner eine Bearbeitungseinrichtung mit verbesserter Kühlung und/oder Schmierung bereitgestellt werden.

Die Aufgabe wird erfindungsgemäß mit einem Verfahren nach Anspruch 1 und mit einer Mischvorrichtung nach Anspruch 7 jeweils zum Herstellen eines mehrphasigen Kühl-und Schmierstoffes für eine Kühlung und/oder Schmierung eines Werkzeuges gelöst. Hinsichtlich der Bearbeitungsvorrichtung wird die vorgenannte Aufgabe erfindungsgemäß durch eine Bearbeitungsvorrichtung nach Anspruch 12 gelöst.

Vorteilhafte Ausführungsformen ergeben sich aus den jeweiligen Unteransprüchen.

Ein Grundaspekt der Erfindung besteht darin, durch ein gesteuertes Mischen eines mehrphasigen Industriegases, insbesondere eines mehrphasigen Kohlendioxids, mit einem Schmiermittel einen mehrphasigen Kühl- und/oder Schmierstoff auszubilden.

Nach einem Aspekt wird ein Verfahren zum Erzeugen eines mehrphasigen Kühl-und/oder Schmierstoffes für eine Kühlung und/oder Schmierung eines Werkzeuges und/oder eines Werkstückes, insbesondere für eine kyrogene Kühlung und Schmierung einer spanendend oder umformend arbeitenden Bearbeitungsvorrichtung und/oder eines spanend oder umformend bearbeiteten Werkstückes bereitgestellt, wobei ein technisches Fluid, insbesondere Kohlendioxid, in mehrere unterschiedliche Aggregatzustände gebracht oder bereitgestellt wird und mit einem Schmiermittel zum Ausbilden des mehrphasigen Kühl- und Schmierstoffes vermischt wird. Unter einem technischen Fluid ist hierbei ein Industriegas zu verstehen, dass durch eine Druckveränderung bei gleichbleibender Temperatur in einen flüssigen Aggregatzustand und in einen gasförmigen Aggregatzustand gebracht werden kann. Die Bereitstellung eines technischen Fluids in zwei Aggregatzuständen hat den Vorteil, dass mit ein und demselben technischen Fluid mehrere Funktionen bereitgestellt werden. Unter einer Bearbeitungsvorrichtung ist hierbei eine Vorrichtung zu verstehen, mit der ein Werkstück bearbeitet, insbesondere spanlos oder spanend bearbeitet, werden kann.

Mit dem Mischen eines technischen Fluides in zwei unterschiedliche Aggregatzustände kann eine mehrphasige Strömung bereitgestellt werden, wobei das Mischen des technischen Fluids in seine unterschiedlichen Aggregatzustände mit dem Schmiermittel laminar, turbulent, kontinuierlich oder dispers durchgeführt wird, um unterschiedliche Durchmischungsgrade und Temperier- und Schmiereigenschaften des mehrphasigen Kühl- und Schmierstoffes erzielen zu können. So kann mittels einer eher laminaren Misch-Strömung ein mehrphasiger Kühl- und/oder Schmierstoff ausgebildet werden, der direkter an das zu temperierende Objekt gebracht werden kann, um mit einem größeren Maß zu schmieren und zu kühlen, da Kühl- und/oder Schmierstoff gesättigter vorliegen, wobei bei einer dispersen Misch-Strömung eine sanftere Kühlung möglich ist, da das Kühlmedium in dem mehrphasigen Kühl- und Schmierstoff in einer größeren Verteilung vorliegt. Unter einer mehrphasigen Strömung ist hierbei eine Strömung aus verschiedenen Stoffen, hier dem Schmiermittel und dem technischen Fluid, zu verstehen, die einzeln aber auch an sich in unterschiedlichen Aggregatzuständen vorliegen.

Nach einer Ausführungsform des Verfahrens wird das technische Fluid in einem gasförmigen oder flüssigen Aggregatzustand zusätzlich in einen flüssigen oder gasfömigen Aggregatzustand gebracht oder bereitgestellt, wobei das technische Fluid in dem flüssigen Aggregatzustand als Kühlmedium wirkt, das von dem technischen Fluid in dem gasförmigen Aggregatzustand, das als Transportmedium wirkt, zusammen mit dem Schmiermittel vermischt wird.

Nach einer anderen Ausführungsform des Verfahrens werden das Kühlmedium, das in dem flüssigen Aggregatzustand ist oder bereitgestellt wird, in einen aerosolen Zustand gebracht, und das Trägermedium, das in den gasförmigen Aggregatzustand gebracht wird oder bereitgestellt wird, mit dem Schmiermittel, das in einen aerosolen Zustand gebracht wird, in einem flüssigen oder gasförmigen Aggregatzustand ist, miteinander vermischt, in dem das Schmiermittel in den Strömungsfluss des gasförmigen Trägermediums, insbesondere unter Hochdruckbeaufschlagung, als Aerosol, in einem flüssigen Aggregatzustand und/oder in einem gasförmigen Aggregatzustand eingebracht wird. Unter einem aerosolen Zustand ist hierbei das Vorliegen des jeweiligen technischen Fluids und/oder Schmiermittels in einem zerstäubten Zustand zu verstehen, in dem das jeweilige Fluid und / oder Schmiermittel in einer Vielzahl von Tropfen vorliegt.

Nach einer anderen Ausführungsform des Verfahrens wird das Schmiermittel vor, bei oder nach der Mischung des gasförmigen Trägermediums mit dem flüssigen Kühlmedium eingebracht. In dem Verfahren werden die jeweiligen Bestandteile des mehrphasigen Kühl- und Schmierstoffes aus gasförmigen und flüssigen technischen Fluid entweder zusammen mit dem Schmiermittel vermischt, oder das mehrphasige technische Fluid wird vor dem Einbringen des Schmiermittels vermischt und dann das Schmiermittel zugeführt und damit vermischt oder das flüssigen technische Fluid wird vor Einbringung des gasförmigen technischen Fluids mit dem Schmiermittel vermischt.

Nach einer Ausführungsform des Verfahrens sind die jeweiligen Misch-Mengenanteile des Trägermediums, des Kühlmediums und des Schmiermittels vorbestimmte Größen oder werden mittels einer speicherprogrammierbaren Steuerung, insbesondere der speicherprogrammierbaren Steuerung eines Computers, unter Berücksichtigung vorbestimmter Prozessparameter eingestellt, insbesondere Prozessparameter der Bearbeitungsvorrichtung eines Werkzeuges und/oder eines zu bearbeitenden Werkstückes. Zum Einstellen des Kühl- und Schmieranteils können die Prozessdaten für die jeweilige Schmierung und Kühlung des mehrphasigen Kühl- und/oder Schmierstoffes vorbestimmt oder abhängig von den erforderlichen Schmier- und Kühlanforderungen eingestellt werden. Dies erfolgt bevorzugt mittels geeigneter Programme, die aus den gemessenen Daten während des Schneid- oder Umformvorgangs die notwenige Schmierung und/oder Kühlung herleiten können. Unter den Prozessparametern der Bearbeitungsvorrichtung, des Werkzeuges und/oder des zu bearbeitenden Werkstückes sind hierbei insbesondere die Parameter zu verstehen mit denen die Bearbeitungsvorrichtung und das Werkzeuges betätigt werden, wie z. B. Drehzahl, Vorschub, Umformprozess und Umformwerkzeug sowie das Material, aus dem das zu bearbeitende Werkstück und das verwendete Werkzeug besteht.

Nach einer Ausführungsform des Verfahrens wird das technische Fluid mittels Steuerung bzw. Regelung des Drucks und/oder der Temperatur des technischen Fluides in den jeweiligen gasförmigen und flüssigen Aggregatzustand unter Berücksichtigung einer Temperatur. Bei der Temperatur kann es sich beispielsweise um die Raumtemperatur handeln, in das Mischen durchgeführt wird oder die Temperatur des zu mischenden gasförmigen oder flüssigen Fluids.

Nach einer Ausführungsform des Verfahrens erfolgt die Kühlung des Werkzeuges und/oder zu bearbeitenden Werkstückes durch eine Zufuhr des mehrphasigen Kühl-und Schmierstoffes teilweise oder vollständig außerhalb und/oder innerhalb des Werkzeuges oder der Bearbeitungseinheit. Durch eine Kühlung an unterschiedlichen Orten kann das Auftreten von Temperaturspannungen vermieden werden. Die Kühlung außerhalb bietet den Vorteil, dass auch Bestands-Bearbeitungs-Vorrichtungen mit dem Verfahren nachgerüstet werden können.

Nach einem anderem Aspekt wird eine Misch-Vorrichtung zum Herstellen eines mehrphasigen Kühl- und Schmierstoffes für eine Kühlung und Schmierung eines Werkzeuges und/oder eines Werkstückes, insbesondere für eine kyrogene Kühlung und Schmierung eines spanendarbeitendes Werkzeuges und/oder eines spanbearbeiteten Werkstückes, bereitgestellt, aufweisend eine erste Vorrichtung, in der ein technisches Fluid in einem flüssigen Aggregatzustand bereitgestellt ist, eine zweite Vorrichtung, in der das technische Fluid in einem gasförmigen Aggregatzustand bereitgestellt ist, eine dritte Vorrichtung zum Bereitstellen eines Schmiermittels, und eine Mischkammer, in der die beiden Aggregatzustände des technischen Fluids mit dem Schmiermittel mischbar sind.

Unter einer zweiten Vorrichtung ist hierbei eine Vorrichtung zu verstehen, die ein technisches Fluid in einem gasförmigen Aggregatzustand bereitgestellt oder von einem flüssigen Aggregatzustand in einem gasförmigen Aggregatzustand überführen kann. Unter einer Mischkammer ist hierbei lediglich ein Abschnitt oder Bereich in einer Leitung zu verstehen, in dem die Bestandteile des mehrphasigen Kühl- und/oder Schmierstoffes zusammen oder schrittweise miteinander vermischt werden. Hierbei ist zu beachten, dass vorzugsweise wenigsten beim Ausbilden des mehrphasigen Kühl- und Schmierstoffes nur dessen Bestandteile vorliegen.

Nach einer Ausführungsform der Misch-Vorrichtung weist die Mischkammer eine Teilmischkammer auf, in der ein Vormischen von zwei Bestandteilen des mehrphasigen Kühl- und Schmierstoffes aus gasförmigem technischen Fluid, flüssigen technischen Fluid oder dem Schmiermittel stattfindet. Unter einer Teilmischkammer ist hierbei lediglich ein Abschnitt oder Bereich in einer Leitung zu verstehen, in dem die jeweiligen Bestandteile des mehrphasigen Kühl- und Schmierstoffes teilweise aufeinanderfolgen miteinander vermischt werden.

Nach einer Ausführungsform der Misch-Vorrichtung weist die Misch-Vorrichtung wenigstens einen Verflüssiger auf, der das technische Fluid von einem gasförmigen in einen flüssigen Aggregatzustand überführt, insbesondere einen Aufbereiter, der durch Druckbeaufschlagung des technischen Fluids das technische Fluid von einem gasförmigen in einen flüssigen Aggregatzustand überführt.

Nach einer Ausführungsform der Misch-Vorrichtung weist die Misch-Vorrichtung wenigstens einen Aufbereiter auf, der das technische Fluid von einem flüssigen in einen gasförmigen Aggregatzustand überführt, insbesondere ein Aufbereiter, der durch Drucksenkung und/oder Erhitzen das technische Fluid von einem flüssigen in einen gasförmigen Aggregatzustand überführt. Unter einem Aufbereiter ist hierbei eine Vorrichtung zu verstehen, mit der ein Fluid von einem gasförmigen in einen flüssigen Aggregatzustand gebracht werden kann. Das Verändern des Aggregatzustandes kann aber auch durch zusätzliche oder separate Maßnahmen, wie Erhitzen oder Verdampfen erfolgen.

Nach einer anderen Ausführungsform der Misch-Vorrichtung weist die Misch-Vorrichtung ein Steuerglied auf, das die Mengenbestandteile des Trägermediums, Kühlmediums und Schmiermittels zum Ausbilden des Kühl- und Schmierstoffes durch Freigeben, Dosieren und/oder Schließen der Zufuhr der Mengenbestandteile steuert. Unter Dosieren ist hierbei auch ein teilweises Öffnen des Durchgangsquerschnittes der Versorgungsleitungen mittels der Steuerglieder zu verstehen. Eine Dosierung kann auch über die Zeit und die Durchflussgeschwindigkeit des jeweiligen Bestandteiles des mehrphasigen Kühl- und Schmierstoffes erfolgen. Unter einem Steuerglied ist hierbei ein Stellglied zu verstehen, wie beispielsweise ein Ventil, das mittels eines Aktuators in eine geöffnete und eine geschlossene Stellung und zusätzlich aber nicht zwingend in Zwischenstellungen eingestellt werden kann.

Nach einem weiteren Aspekt wird eine Bearbeitungsvorrichtung zum spanenden oder umformenden Bearbeiten eines Werkstückes, mit einer Misch-Vorrichtung nach obigen Aspekten bereitgestellt. Unter einer Bearbeitungsvorrichtung ist hierbei jede Vorrichtung zu verstehen, bei der der erfindungsgemäße mehrphasige Kühl- und Schmierstoff eingesetzt werden kann. Unter Bearbeitungsvorrichtung ist aber jede Bearbeitungsvorrichtung zu verstehen, mit der auf ein Substrat/Werkstück eingewirkt werden kann. Schneidbearbeitungen d. h. spanende Bearbeitungen oder Umformbearbeitung sind lediglich als Beigabe genannt.

Nachfolgend wird die vorliegende Erfindung anhand von Ausführungsbeispielen in Verbindung mit den zugehörigen Zeichnungen näher erläutert. In diesen zeigen:
- Fig. 1: ein schematisches Blockschaltdiagramm eines Schaltplans einer ersten und einer zweiten Ausführungsform einer Mischvorrichtung zum Mischen eines Kühlschmierstoffs aus einem mehrphasigen technischen Fluid und einem Schmiermittel,
- Fig. 2: ein schematisches Blockschaltdiagramm eines Schaltplans einer dritten Ausführungsform der in Fig. 1 gezeigten Mischvorrichtung,
- Fig. 3a bis 3b: ein schematisches Blockschaltdiagramm von Ausführungsformen der in Fig. 1 gezeigten Mischvorrichtung,
- Fig. 4a bis 4c: Ausbringungsmöglichkeiten des Kühlschmierstoffs in oder an einer Bearbeitungsvorrichtung,
- Fig. 5: ein schematisches Blockschaltdiagramm, in dem Verfahrensschritte zum Herstellen des mehrphasigen Kühlschmierstoffs dargestellt sind.

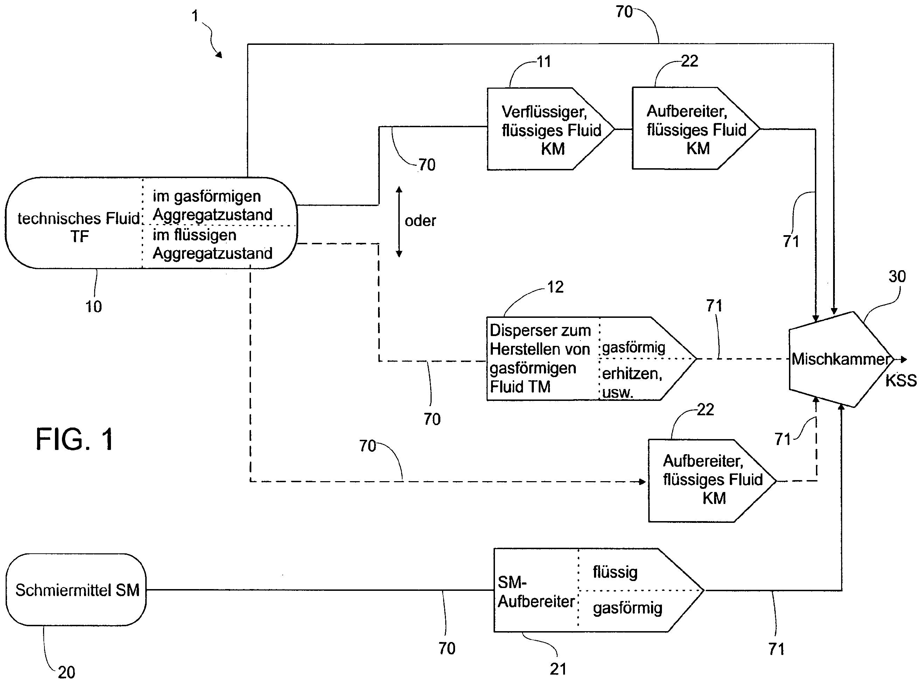

Fig. 1 zeigt in einem schematischen Blockschaltbild eine erste Ausführungsform einer Mischvorrichtung 1 zum Herstellen eines mehrphasigen Kühl- und/oder Schmierstoffes KSS, das ein technisches Fluid TF aufweist, das sowohl als Kühlmittel KM als auch als Trägermittel TM des Kühlmittels KM und eines Schmiermediums SM ausgebildet wird.

Die Mischvorrichtung 1 weist einen Sammelbehälter 10 auf, in dem ein Industriegas, insbesondere ein technisches Gas wie Kohlendioxid gespeichert ist, das für die Herstellung eines Kühlschmiergemisches geeignet ist. Bevorzugt wird als Industriegas bzw. technisches Fluid TF Kohlendioxid verwendet, da Kohlendioxid bei Raumtemperatur durch Druckerhöhung und Druckminderung in unterschiedliche Aggregatzustände gebracht werden kann.

Als technisches Gas sind jedoch auch andere Industriegase verwendbar, die im Wesentlichen durch Druckerhöhung bei Raumtemperatur verflüssigt werden können.

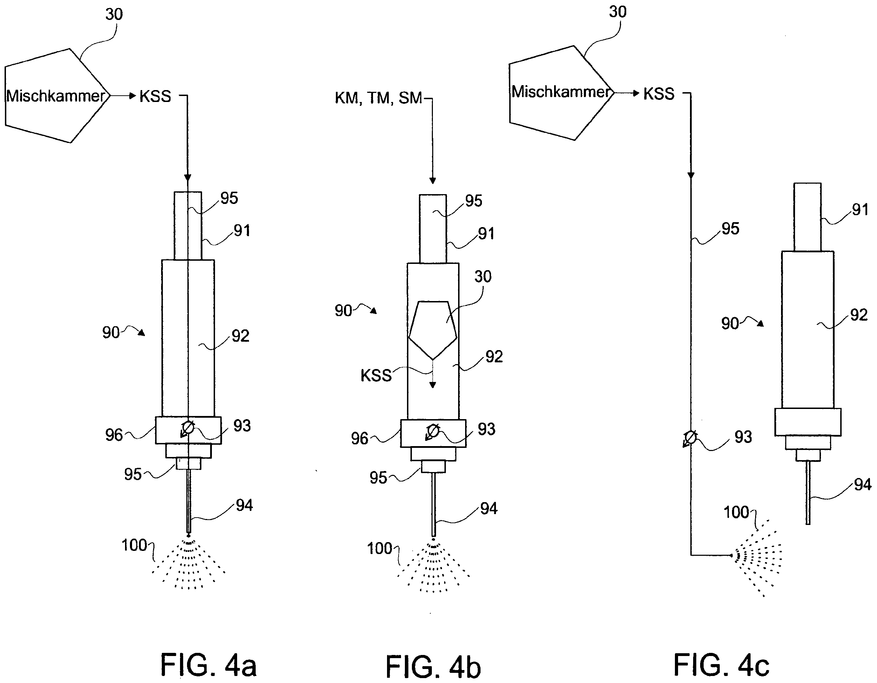

Bevorzugt wird das technische Fluid TF zum Erzeugen des mehrphasigen Kühl- und Schmierstoffes KSS in einen ersten, flüssigen Aggregatzustand und in einen zweiten, gasförmigen Aggregatzustand gebracht. Der flüssige Aggregatzustand KM des technischen Fluids TF wirkt in dem mehrphasigen Kühlschmierstoff KSS als Kühlmittel, wobei der gasförmige Aggregatzustand TM als Trägermedium des Kühl- und Schmierstoffes KSS funktioniert, so dass der Kühl- und/oder Schmierstoff an die zu temperierende Stelle eines Werkzeuges, insbesondere eines spanenden oder umformenden Werkzeuges 94 einer Bearbeitungsvorrichtung 90 (siehe Figuren 4a und 4b) und/oder an ein zu temperierende Werkstück transportiert werden kann, um dort beispielsweise einen Kühl-Schneestrahl an einer Wirkstelle 100 mittels des mehrphasigen Kühlschmierstoff KSS zu erzeugen.

Dies hat den Vorteil, dass das Temperieren bzw. Kühlen einer Bearbeitungsvorrichtung 90, eines Werkzeuges 94 und/oder Werkstückes (siehe Figur 4a) ohne spezielle Maßnahmen an dem Werkstück, dem Werkzeug 94 oder der Bearbeitungsvorrichtung 90 vorgenommen werden kann, was insbesondere die Betriebssicherheit erhöht. Ein anderer Vorteil von Kohlendioxid als Kühlmedium ist, dass durch eine moderate Druckerhöhung von mindestens 55,4 MPa auch bei Raumtemperatur ein Verflüssigen des Kohlenstoffdioxids möglich ist und auch als Kühlmedium und auch als Trägermedium für ein Schmiermittel geeignet ist, da das Kohlendioxid mit dem Schmiermittel keine Verbindung eingeht.

Das technische Fluid TF, dass in einem flüssigen Aggregatzustand ist, funktioniert bei dem mehrphasigen Kühl- und/oder Schmierstoffes KSS als Kühlmittel, wobei der flüssige Aggregatzustand bevorzugt durch eine Steuerung des Druckes des technischen Fluides TF erfolgt. Durch die Drucksteuerung wird das technische Fluid in den jeweils vorbestimmten flüssigen und gasförmigen Aggregatzustand gebracht.

Die Steuerung des Aggregatzustandes aus einem technischen Fluides TF zum Ausbilden des flüssigen Kühlmediums KM und des gasförmigen Transportmediums TM über den Druck hat den Vorteil, dass das verwendete technische Fluid TF bei üblichen Raumtemperaturen verwendet werden kann und es nicht erforderlich ist, dieses auf Temperaturen herabzukühlen, wie es beispielsweise bei Stickstoff N erforderlich ist.

Die Verwendung von Kohlendioxid CO₂ als technisches Fluid TF hat den Vorteil, dass die verwendeten Bauelemente der Mischvorrichtung bzw. der mit dem Kühlschmierstoff in Kontakt kommenden Vorrichtungen im Wesentlichen für hohe Drücke ausgelegt werden müssen, nicht aber für besonders niedrige Temperaturen, die beispielsweise zu einer Versprödung des mit dem Kühl- und/oder Schmierstoff in Kontakt kommenden Materials führen können, wenn dies nicht mit dem mehrphasigen Kühl- und Schmierstoff durchgeführt wird.

Fig. 1 zeigt in einem schematischen Blockschaltbild eine Mischvorrichtung 1 zur Herstellung eines mehrphasigen Kühlschmierstoffes KSS, der zur Kühlung und/oder zur Schmierung innerhalb einer Bearbeitungsvorrichtung 90 (siehe Figur 4a), insbesondere eines spanenden oder umformenden Werkzeuges 94 und/oder eines mit einem spanenden oder umformenden Werkzeug 94 zu bearbeiteten Werkstückes (nicht dargestellt) einsetzbar ist.

Die Mischvorrichtung 1 weist in einer ersten Ausführungsform einen Sammelbehälter 10 für ein technisches Fluid TF auf. Das technische Fluid liegt in dem in Figur 1 gezeigten Sammelbehälter 10 entweder in einem flüssigen oder in einem gasförmigen Aggregatzustand vor. Das Schmiermittel SM liegt bevorzugt in einem flüssigen Aggregatzustand vor. Bei dem technischen Fluid TF handelt es sich bevorzugt um Kohlendioxid CO₂.

Wenn in dem Sammelbehälter 10 das technische Fluid TF in einem gasförmigen Aggregatzustand bereitgestellt wird, ist der Sammelbehälter mittels der Versorgungsleitungen 70 einerseits mit einem Kühl-Schmierung-Mischer 30 und andererseits mit einem Verflüssiger 11 zum Verflüssigen des gasförmigen technischen Fluides TF verbunden. In dem Verflüssiger 11 wird das technische Fluid bevorzugt über eine Drückerhöhung in den flüssigen Aggregatzustand gebracht.

Dem Verflüssiger 11 ist ein Aufbereiter 22 nachgeschaltet, der das in den flüssigen Aggregatzustand verbrachte technische Fluid TF in dem flüssigen Zustand zerstäubt, so dass das zerstäubte aber flüssige Fluid als Aerosol vorliegt.

Das Schmiermittel SM wird bevorzugt in einem Sammelbehälter 20 in einem flüssigen Aggregatzustand bereitgestellt und ist mit einer Versorgungsleitung 70 an dem Kühl-Schmierung-Mischer 30 fluiddicht angeschlossen.

Das im Verflüssiger 11 der Mischvorrichtung 1 vorliegende technische Fluid in einem flüssigem Aggregatzustand kann alternativ an einen Aerosol-Erzeugen 22 geleitet werden, der das Kühlmedium KM in einen nebelartigen, zerstäubten Aggregatzustand versetzt, so dass das Kühlmedium KM in zerstäubter Form, aber in einem flüssigen Aggregatzustand als Aerosol vorliegt. Das Kühlmedium KM liegt hierbei in einer Vielzahl von Tropfen vor, so dass dieses mit dem gasförmigen Trägermedium TM und dem als Aerosol vorliegenden Schmiermittel SM vermischt werden kann und an einer Wirkstelle 100, beispielsweise in dem Werkzeug oder am Werkstück, ausbringbar ist. Vorzugsweise wird das zerstäubte Kühlmedium KM direkt in den Stromfluss des Trägermediums TM eingespritzt.

Der Verflüssiger 11 bzw. der Aufbereiter 22 sind jeweils mittels einer Zuführleitung 71 an dem Kühl-Schmierung-Mischer 30 fluiddicht angeschlossen. In einer anderen Ausführungsform kann die Aufbereitung des flüssigen technischen Fluids KM auch in der Mischkammer 30 erfolgen und daher auf die Zuführleitung verzichtet werden, da der Aufbereiter 22 in einer Mischkammer 30 integriert ist. In der Mischkammer 30 erfolgt das teilweise oder vollständige Vermischen des flüssigen technischen Fluids KM, des gasfömigen technischen Fluids TM und des Schmiermittels SM. Die Mischkammer 30 kann auch Teilkammer oder Abschnitte aufweisen, in denen zwei Bestandteile des mehrphasigen Kühl-und Schmierstoffes KSS vorgemischt werden, bevor der dritte Bestandteil zugemischt wird.

Das technische Fluid TF im gasförmigen Aggregatzustand und das mittels des Verflüssigers 11 im flüssigen Aggregatzustand vorliegende technische Fluid TF werden in den unterschiedlichen Aggregatzuständen mit dem Schmiermittel SM in dem Kühl-Schmierung-Mischer KSS in den mehrphasigen Kühl- und/oder Schmierstoff KSS vermischt, wobei das technische Fluid TF in zwei Aggregatzuständen vorliegt und als Kühlmittel KM und als Transportmittel TM sowohl für das Kühlmittel als auch das Schmiermittel SM funktioniert.

Der Schmiermittel-Aufbereiter 21 bringt das Schmiermittel SM in einen flüssigen Aggregatzustand, insbesondere in eine aerosole Form, so dass das Schmiermittel SM von dem gasförmigen Trägermedium TM transportiert und befördert werden kann. Vorzugsweise wird das Schmiermittel druckbeaufschlagt, insbesondere in aerosoler Form, in den Strömungsfluss des in einem gasförmigen Aggregatzustand befindlichen Trägermediums TM eingespritzt, so dass die Töpfchen des Schmiermittels SM von den Töpfchen des Trägermediums mittransportiert werden.

Das verflüssigte, technische Fluid FT funktioniert nach der Verflüssigung als ein Kühlmedium KM und kann zum Erzeugen eines Kühlstrahles an einer Wirkstelle 100 verwendet werden, der über die Mischkammer 30 einem Werkzeug 94 innerhalb einer Bearbeitungseinheit 90 oder Werkstück zugeführt wird.

In der zweiten Ausführungsform der Mischvorrichtung 1 zur Herstellung eines mehrphasigen Kühlschmierstoffes KSS wird das technische Fluid TF in einem flüssigen Aggregatzustand in dem Sammelbehälter 10 bereitgestellt. Die Versorgungs- und Zuführleitungen 70, 71 der zweiten Ausführungsform sind in gestrichelten Linien dargestellt.

Anstelle des Verflüssigers und des Aufbereiters 22 ist ein Disperser vorgesehen, der das in dem Sammelbehälter 10 bereitgestellt technische Fluid TF in einem flüssigen Aggregatzustand zusätzlich in einen gasförmigen Zustand verbringt. Das Überführen des technische Fluids TF in einem flüssigen Aggregatzustand erfolgt bevorzugt durch Druckminderung. Es sind jedoch auch andere Verfahren vorstellbar. Beispielsweise kann das technische Fluids TF in einem flüssigen Aggregatzustand durch Erhitzen in den gasförmigen Aggregatzustand verdampft werden.

Der Disperser 12 bewirkt an dem flüssig vorliegenden technischen Fluid TF eine Aggregatszustandsänderung, so dass das technische Fluid TF in einem gasförmigen Aggregatzustand vorliegt. Dies wird bevorzugt durch eine Druckminderung an dem vorliegenden technischen Fluid TF durchgeführt, so dass das technische Fluid TF von einem möglicherweise ursprünglich flüssigen Aggregatzustand in einen gasförmigen Aggregatzustand übergeht. Alternativ kann das das Verbringen in den gasförmigen Aggregatzustand auch durch Verdampfen bzw. Erhitzen des technischen Fluids TF erfolgen.

Wie in Fig. 1 dargestellt ist in der zweiten Ausführungsform der der Mischvorrichtung 1 zur Herstellung eines mehrphasigen Kühlschmierstoffes KSS der Sammelbehälter 10 mit dem technischen Fluid im flüssigen Aggregatzustand einerseits mit einer Versorgungs-Leitungen 70 an der Kühl-Schmierung-Mischer 30 fluiddicht angeschlossen und andererseits zum Ausbilden des gasförmigen Fluids TM mit einem Disperser 12 fluiddicht verbunden, der mit der Kühl-Schmierungs-Misch-Vorrichtung 30 über die Versorgungsleitung 71 fluiddicht verbunden ist.

Das Mischen des Kühl- und Schmiermediums KSS kann auch an Leitungskreuzungen in und / oder an Austrittsöffnungen an dem Bearbeitungseinheit 90 durchgeführt werden, wobei das Kühlmedium KM, das Trägermedium TM und das Schmiermittel SM zum Vermischen zusammengeführt werden.

Das gasförmige Fluid dient als Träger- und Transportmedium TM des Kühlmittels KM und des Schmiermittels SM.

Bei dem technischen Fluid TF handelt es sich bevorzugt um Kohlendioxid CO₂, das bei einer Raumtemperatur von etwa 20 °C und einem Druck von etwa mindestens 55,4 MPa in den flüssigen Aggregatzustand gebracht werden kann, um so als Kühlmedium KM zu funktionieren.

Das technische Fluid FT Kohlendioxid CO₂ erfüllt hierbei eine Doppelfunktion als Kühlmittel KM in dem flüssigen Aggregatzustand und als Trägermedium TM in dem gasförmigen Aggregatzustand.

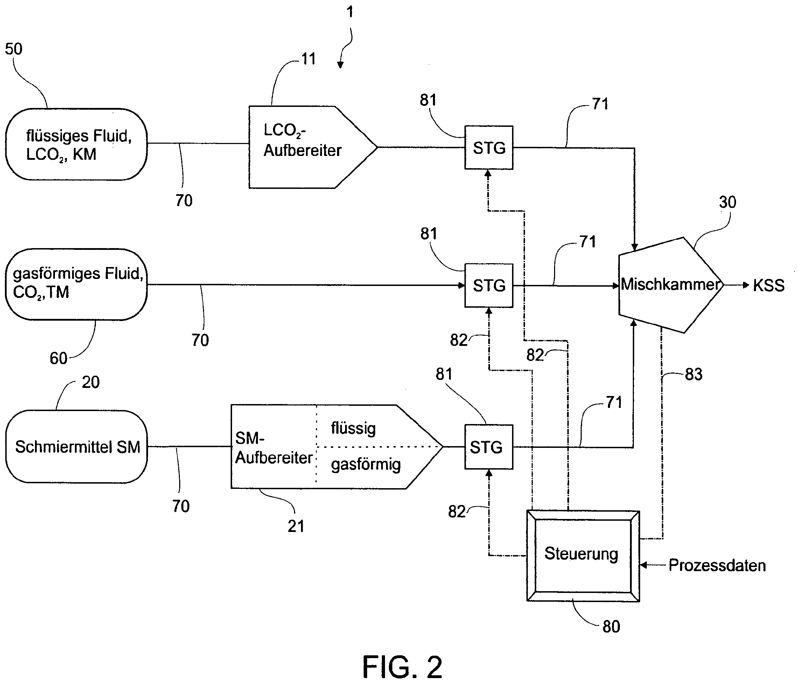

Die Mengenanteile von flüssigen Fluid KM, gasförmigen Fluid TM und Schmiermittel SM, bzw. die jeweiligen Mengenanteile von Trägermedium TM, Kühlmedium KM und Schmiermittel SM können mittels der Mischkammer 30 und / oder mittels Stellgliedern 81 (siehe Figur 2) vorab eingestellt werden, dass entsprechend der Temperiererfordernisse an dem Werkstück und/oder an dem Werkzeug die jeweiligen Anteile von Kühlmittel, Schmiermittel und Trägermedium an die entsprechenden Erfordernisse anpassbar und einstellbar sind.

Fig. 2 zeigt ein schematisches Blockschaltdiagramm einer dritten Ausführungsform der Mischvorrichtung 1 zur Herstellung eines Kühlschmierstoffs KSS, wobei als technischen Fluid Kohlenstoffdioxid CO₂ in entsprechenden Sammelbehältern 50, 60 in flüssigen Aggregatzustand LCO₂ und in einem gasförmigen Aggregatzustand CO₂ bereitgestellt wird. Das Kohlenstoffdioxid CO₂ im flüssigen Aggregatzustand im Sammelbehälter 50 und das Kohlenstoffdioxid CO₂ im gasförmigen Aggregatzustand im Sammelbehälter 60 wird bevorzugt aus einem Sammelbehälter 10 hergestellt, in dem das Kohlenstoffdioxid in festen oder in flüssigen Aggregatzustand vorliegt, wie im Detail bereits in Figur 1 beschrieben worden ist.

Als Kühlmedium wird in der Mischvorrichtung 1 zum Herstellen eines mehrphasigen Kühl- und Schmierstoffes KSS in einem Sammelbehälter 50 ein flüssiges Fluid, vorzugsweise flüssiges CO₂ (LCO₂) bereitgestellt, das bedarfsweise mit einem LCO₂-Aufbereiter 11 in dem flüssigen Aggregatzustand gehalten und zu einem Aerosol zerstäubt wird.

Der LCO₂-Aufbereiter 11 bzw. die Versorgungsleitung 70 zwischen dem LCO₂-Aufbereiter 11 und einem Kühlschmiermischer 30 wird mittels eines Steuergliedes 81 je nach Mengen-Bedarf geöffnet und geschlossen, das mittels einer Maschinensteuerung 80 oder einer anderen Prozessdaten-Verarbeitungsvorrichtung, wie einem Computer 80 vorab gesteuert wird.

Ferner weist die Mischvorrichtung 1 zum Herstellen eines mehrphasigen Kühl- und/oder Schmierstoffes KSS einen Sammelbehälter 60 auf, in dem ein gasförmiges Fluid, hier bevorzugt Kohlendioxid CO₂ als Trägermedium TM bereitgestellt wird. Das Trägermedium TM ist bevorzugt in einem gasförmigen Aggregatzustand bereitgestellt, mittels dem das Kühlmittel KM und das Schmiermittel SM zur Temperierung und Schmierung an eine Wirkstelle 100 geführt werden kann.

Die Versorgungsleitung 70 des Behälters 60 ist ebenfalls mit einem Steuerglied 81 verbunden, das die Versorgungsleitung zwischen Mischerkammer 30 und Sammelbehälter 10 öffnet und schließt, so dass der Mengenanteil an gasförmigem Fluid bzw. Trägermaterial TM gemäß vorbestimmter Steuersignale gesteuert werden kann, die aus der Auswertung vorgegebener Prozessdaten ermittelt werden.

Ferner ist die Mischkammer 30 zur Herstellung des Kühlschmierstoffs KSS mit einem Schmiermittel-Sammelbehälter 20 versehen, der ein Schmiermittel SM bereitstellt, das über eine Versorgungsleitung 71 über einen Schmiermittel-Aufbereiter 21 hin zu dem Kühlschmierungsmischer 30 geleitet wird. Der Schmiermittel-Aufbereiter 21 hat die Funktion, das Schmiermittel SM in ein Aerosol umzuwandeln, so dass das Schmiermittel SM nebelartig verteilt in einem flüssigen Aggregatzustand vorliegt, und mit dem mehrphasig vorliegenden Kohlendioxid vermischt wird. Es liegt im Bereich der Erfindung, dass das Schmiermittel in dem Aufbereiter 21 auch in einem gasförmigen Aggregatzustand durch Verdampfen gebracht wird und im gasförmigen Aggregatzustand mit dem mehrphasigen Kohlendioxid vermischt wird.

Zwischen der Mischerkammer 30 und dem Schmiermittel-Aufbereiter 21 ist ebenfalls ein Steuerglied 81 vorgesehen, dass die Versorgungsleitung 71 je nach Bedarf öffnet, dosierend öffnet oder schließt, so dass der Mengenanteil an Schmiermittel gesteuert werden kann. Zur Steuerung der Steuerglieder 81 ist die Steuerung 80 über Kommunikationsleitungen 82 mit denselben verbunden. Mittels der Auswertung von Prozessdaten über die Bearbeitungsvorrichtung 90, das Werkzeug 94 und / oder den zu bearbeitenden Werkstoff ermittelt die Steuerung 80 die jeweiligen Mengenanteile von flüssigen und gasförmigen technischen Fluid KM, TM und Schmiermittel SM und steuert bzw. dosiert die Zuführ an den jeweiligen Mengenanteile von flüssigen und gasförmigen technischen Fluid KM, TM und Schmiermittel SM.

Bevorzugt wird das Schmiermittel SM mittels des Nebelerzeugers 21 in einen nebelartigen Zustand in aerosole Form gebracht, so dass das Schmiermittel SM von dem Trägermedium TM, das ein Fluid in einem gasförmigen Aggregatzustand ist, besser transportiert werden kann.

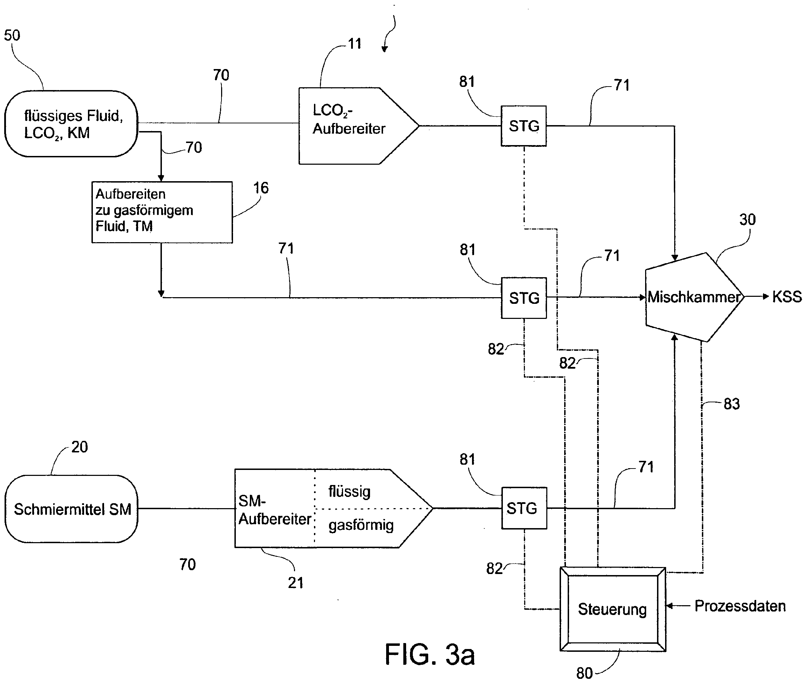

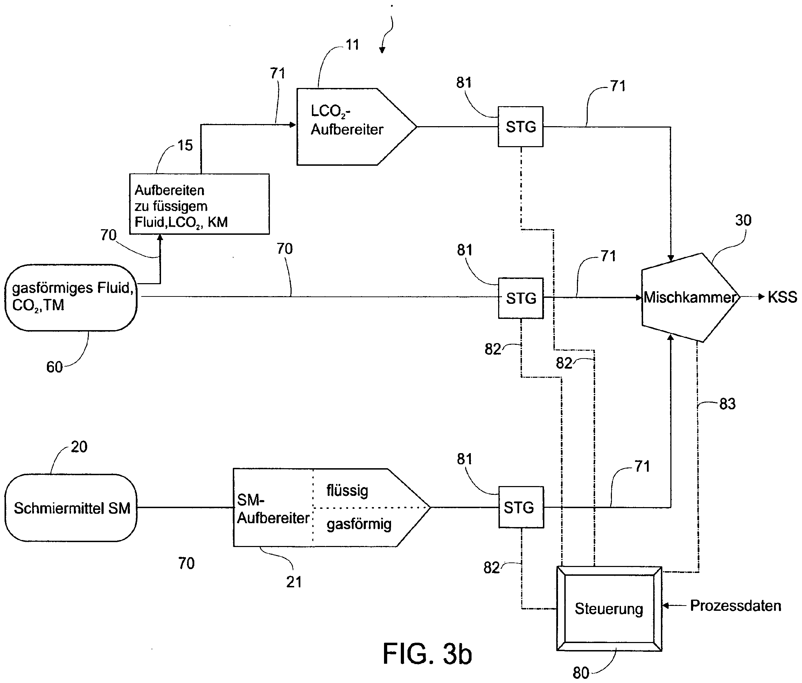

Fig. 3a und 3b zeigen weitere Ausführungsformen der in Fig. 1 dargestellten Mischervorrichtung 1.

In der in Figur 3a gezeigten Ausführungsform der Mischvorrichtung 1 wird das technische Gas als flüssiges Fluid LCO₂ in dem Sammelbehältern 50 bereitgestellt. Der Sammelbehälter 50 ist mit einem Aufbereiter 16 über die Versorgungsleitung 70 verbunden. Der LCO₂-Aufbereiter 11 bringt das flüssige Fluid LCO₂ in einen aerosolen Zustand.

Der Aggregatzustand-Aufbereiter 16 wandelt bei Bedarf das flüssige Fluid KM des Sammelbehälters 50 in gasförmiges Fluid TM.

In der in Figur 3b gezeigten Ausführungsform der Mischvorrichtung 1 wird das technische Gas als gasförmiges Fluid CO_{2, TM} in dem Sammelbehältern 60 bereitgestellt. Der Sammelbehälter 60 ist mit einem Aufbereiter 16 über die Versorgungsleitung 70 verbunden.

Der Aggregatzustand-Aufbereiter 15 wandelt bei Bedarf das gasförmige Fluid TM des Sammelbehälters 60 in flüssiges Fluid KM.

In der Figur 2 und 3 ist eine zweite Kommunikationsleitung 83 gezeigt, die Bearbeitungs-Prozessdaten weiterleitet, die bei der Bearbeitung des Werkstückes anfallen. Die Bearbeitungs-Prozessdaten können zum Regeln der Mengenanteile von flüssigen und gasförmigen technischen Fluid KM, TM und Schmiermittel SM von der Steuerung 80 ausgewertet werden und zum Erzeugen aktueller Steuersignale an die Steuerglieder 81 verwendet werden.

Fig. 4a und 4b zeigen Ausführungsbeispiele einer internen und einer externen Kühlung mittels des Kühlschmierstoffs KSS einer Bearbeitungsvorrichtung 90.

Fig. 4a zeigt eine Bearbeitungsvorrichtung 90, die mit eine Mischkammer 30 der Mischer-Vorrichtung 1 aufweist. Die Bearbeitungsvorrichtung 90 ist mittels einer Versorgungsleitung 95 mit der Mischkammer 30 verbunden, die durch eine Dreh-durchführung 91, eine Spindel 92 und durch das Werkzeug 94 hindurch führt, so dass ein Kühlnebel, hier ein CO2-Schneestrahl an der Wirkstelle 100 austreten kann, der bei der spanenden oder umformenden Bearbeitung eines Werkstückes sowohl das Werkzeug als auch das Werkstück kühlt. Die Mischkammer 30 ist der Spindel stromaufwärts zu der Zuführung des mehrphasigen Kühl- und Schmierstoffes KSS vorgelagert.

Im Anzugsbolzen 90 der Werkzeugaufnahme der Bearbeitungsvorrichtung 90 ist vorzugsweise ein Druckbegrenzungsventile 93 vorgesehen, so dass das Druckbegrenzungsventil 93 die Zufuhr von Kühlschmierstoff automatisch stoppt, wenn ein Werkzeug 94, wie beispielsweise ein Bohrer, aus einer Werkzeugaufnahme 97 ausgetauscht und entfernt wird, das mit einem Zuführ- und Kühlkanal versehen ist, durch den hindurch das Kühlschmiermittel KSS geleitet und geführt wird.

Fig. 4b zeigt eine andere Ausführungsform der Bearbeitungsvorrichtung 90. Die Mischkammer 30 ist in der hier gezeigten Bearbeitungsvorrichtung 30 in einer Kavität innerhalb der Spindel 92 der Bearbeitungsvorrichtung 30 angeordnet.

Fig. 4c zeigt eine externe Kühlung und Schmierung mittels des Kühlschmierstrahles an einer Wirkstelle 100, wobei die Versorgungsleitung 95 außerhalb des Spanwerkzeuges 90 verläuft und bei bestehenden Spanwerkzeugen nachträglich nachgerüstet werden kann.

Der Kühlschmierstrahl 100 kann zur Kühlung und zur Schmierung des zu bearbeitenden Werkstückes verwendet werden und kann derart ausgerichtet werden, dass der Kühlschmierstrahl 100 zur Kühlung und/oder zur Schmierung auf das Werkzeug 90 und/oder das Werkstück ausgerichtet ist. Je nach Steuerung der Mengenanteile des flüssigen Kühlmediums KM, des gasförmigen Trägermediums TM und des Schmiermittels SM ist auch eine bloße Kühlung der Wirkstelle 100 möglich. Ohne eine Schmiermittelzufuhr entsteht nur ein Kühlstrahl.

Die interne und externe Kühlung des in Fig. 4a bis Fig. 4c gezeigten Kühlschmiermischersystems kann auch gleichzeitig stattfinden, wobei die Kühlschmierung wie in Fig. 4a gezeigt, intern in dem Werkzeug stattfindet und zusätzlich eine externe Kühlschmierung an dem Werkzeug und dem Werkstück durchgeführt wird, wie in Fig. 4b gezeigt.

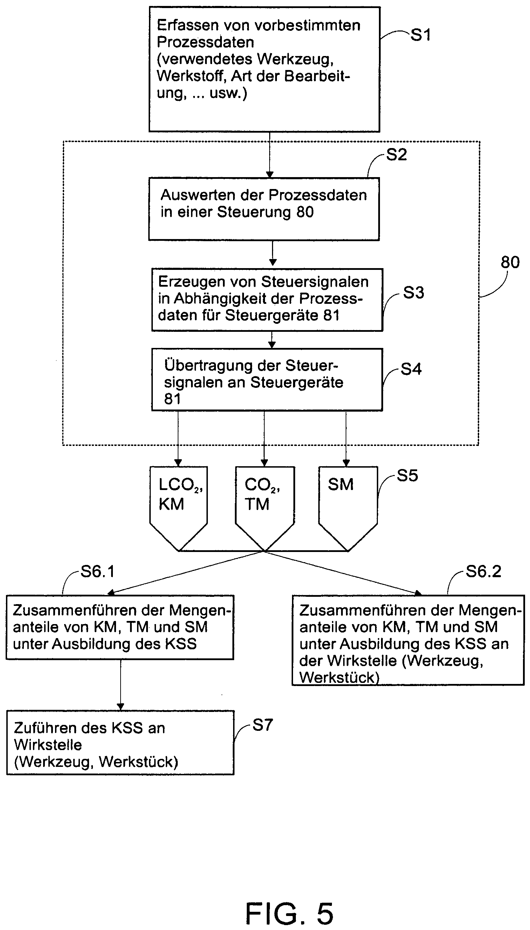

Figur 5 zeigt in einem schematischen Blockschaltdiagramm ein Verfahren zur Ausbildung des mehrphasigen Kühl- und Schmierstoffes KSS, der ein mehrphasiges Kohlendioxid in gasförmigen und im flüssigen Aggregatzustand und einen dem mehrphasigen Kohlendioxid zugemischtes Schmiermittel SM aufweist.

In einem ersten Verfahrensschritt S1 werden vorbestimmte Prozessdaten, wie Umformverfahren, maximale Drehzahl, vorbestimmte Kühlung usw., in eine Steuerung 80 übertragen bzw. eingegeben.

Die vorbestimmten Prozessdaten sind zur Steuerung der Steuergeräte 81 (siehe Figuren 2 bis 3) erforderlich, so dass die Mengenanteile an flüssigen Fluid KM, insbesondere flüssiges Kohlenstoffdioxid, gasförmigen Fluid TM, insbesondere gasförmiges Kohlenstoffdioxid und Schmiermittel SM in der jeweiligen Menge bereitgestellt werden, so dass der mehrphasige Kühl- und Schmierstoff KSS bereitgestellt werden kann.

Im Schritt S2 werden die erfassten bzw. eingegebenen Prozessdaten mittels eines Steuerungsprogramms der Steuerung 80 ausgewertet und in Schritt S3 in korrespondierende Steuersignale umgewandelt, mittels denen die Steuergeräte 81 die jeweiligen Mengenanteile an flüssigen Fluid LCO2, KM, gasförmigen Fluids, CO2, TM und Schmiermittel SM bereitstellen. Nach der Auswertung der Prozessdaten erfolgt im Schritt S4 eine Übertragung der jeweiligen Steuersignale an die entsprechenden Steuergeräte 81, so dass die entsprechenden Mengenanteile im Schritt S5 von den Steuergeräten 81 freigegeben werden und beispielsweise in einer Bearbeitungsvorrichtung 90, an einer Wirkstelle 100 und / oder einer Mischkammer in der Misch-Vorrichtung 30 zum mehrphasigen Kühl- und Schmierstoff KSS vermischt werden.

Die von den Steuergeräten 81 bereitgestellten Mengenanteile des flüssigen Fluids LCO2, KM, gasförmigen Fluids CO2, TM und des Schmiermittels SM können je nach Ausführungsform der Bearbeitungseinheit und des verwendeten Werkzeugs entweder vor dem Zuführen an eine Wirkstelle zusammengeführt und vermischt werden, wie im Schritt S6.1 angezeigt, oder erst bei der Ausbringung an der Wirkstelle an sich, wie im Schritt S6.2 dargestellt.

Falls eine Zusammenführung der Mengenanteile des flüssigen Fluids LCO2, KM, gasförmigen Fluids CO2, TM und des Schmiermittels SM vor der Ausbringung an der Wirkstelle erfolgt, wird zunächst der mehrphasige Kühl- und/oder Schmierstoff KSS in Schritt S6.1 zusammengeführt und vermischt, so dass der mehrphasige Kühl- und/oder Schmierstoff KSS ausgebildet wird. In Schritt S7 wird dann der mehrphasige Kühl- und Schmierstoff KSS zu der Wirkstelle 100 an einer Bearbeitungsvorrichtung 90 transportiert und dort ausgebracht.

Die Erfindung betrifft ein Verfahren und eine Misch-Vorrichtung zum Erzeugen eines mehrphasigen Kühl- und/oder Schmierstoffes für eine Kühlung und/oder Schmierung eines Werkzeuges und/oder eines Werkstückes, insbesondere für eine kyrogene Kühlung und Schmierung eines Bearbeitungswerkzeugs oder eines einer Bearbeitung unterworfenen Werkstückes, insbesondere eines Schneidwerkzeugs und/oder eines spanendbearbeiteten Werkstückes, wobei ein technisches Fluid, insbesondere Kohlendioxid, in mehrere unterschiedliche Aggregatzuständen gebracht oder bereitgestellt wird und mit einem Schmiermittel zum Ausbilden des Kühl- und/oder Schmierstoffes vermischt wird, sowie eine Bearbeitungsvorrichtung, die die Misch-Vorrichtung bzw. einen Kühl- und/oder Schmierstoff nach der vorliegenden Erfindung bereitstellt bzw. verwendet.

## Patentansprüche

1. Verfahren zum Erzeugen eines mehrphasigen Kühl- und/oder Schmierstoffes (KSS) für eine Kühlung und Schmierung eines Werkzeuges (94) und/oder eines Werkstückes, insbesondere für eine kryogene Kühlung und Schmierung einer spanenden oder umformend arbeitenden Bearbeitungsvorrichtung (90) und/oder eines spanend oder umformend bearbeiteten Werkstückes, wobei ein technisches Fluid (TF) in mehrere unterschiedliche Aggregatzustände (TM, KM) gebracht oder bereitgestellt wird und mit einem Schmiermittel (SM) zum Ausbilden des mehrphasigen Kühl- und Schmierstoffes (KSS) vermischt wird, wobei das technische Fluid in dem flüssigen Aggregatzustand als Kühlmedium (KM) wirkt und das technische Fluid in dem gasförmigen Aggregatzustand als Trägermedium (TM) des Schmiermittels (SM) und des Kühlmediums (KM) wirkt, **dadurch gekennzeichnet, dass** das Kühlmedium (KM) in einen vorzugsweise aerosolen Zustand gebracht wird und das Schmiermittel (SM) in einen aerosolen Zustand gebracht wird und miteinander vermischt werden, in dem das Schmiermittel (SM) in den Strömungsfluss des gasförmigen Trägermediums (TM) eingebracht wird.

2. Verfahren nach Anspruch 1, **dadurch gekennzeichnet, dass** das Schmiermittel (SM) in den Strömungsfluss des gasförmigen Trägermediums (TM) unter Hochdruckbeaufschlagung, als Aerosol, in einem flüssigen Aggregatzustand und/oder in einem gasförmigen Aggregatzustand eingebracht wird.

3. Verfahren nach wenigstens einem der vorhergehenden Ansprüche 1 oder 2, **dadurch gekennzeichnet, dass** das Schmiermittel (SM) vor, bei oder nach der Mischung des gasförmigen Trägermediums (TM) mit dem flüssigen Kühlmedium (KM) eingebracht wird.

4. Verfahren nach einem der vorhergehenden Ansprüche 1 bis 3, **dadurch gekennzeichnet, dass** die jeweiligen Misch-Mengenanteile des Trägermediums (TM), des Kühlmediums (KM) und des Schmiermittels (SM) vorbestimmte Größen sind oder mittels einer speicherprogrammierbaren Steuerung oder Regelung, insbesondere der speicherprogrammierbaren Steuerung eines Computers (80), unter Berücksichtigung vorbestimmter Prozessparameter eingestellt werden, insbesondere Prozessparameter der Bearbeitungsvorrichtung (90) des Werkzeuges (94) und / oder des zu bearbeitenden Werkstückes.

5. Verfahren nach wenigstens einem der Ansprüche 1 bis 4, **dadurch gekennzeichnet, dass** das technische Fluid mittels Steuerung bzw. Regelung des Drucks und / oder der Temperatur des technischen Fluids (TF) in den jeweiligen gasförmigen und flüssigen Aggregatzustand (KM, TM) unter Berücksichtigung einer Temperatur überführt wird.

6. Verfahren nach wenigstens einem der vorhergehenden Ansprüche 1 bis 5, **dadurch gekennzeichnet, dass** die Kühlung und Schmierung des Werkzeuges (94) und / oder zu bearbeitenden Werkstückes durch eine Zufuhr des mehrphasigen Kühl- und Schmierstoffes (KSS) teilweise oder vollständig außerhalb und / oder innerhalb des Werkzeuges (94) oder der Bearbeitungseinheit (90) erfolgt.

7. Misch-Vorrichtung zum Herstellen eines mehrphasigen Kühl- und Schmierstoffes (KSS) der nach wenigstens einem der Ansprüche 1 bis 6 hergestellt worden ist für eine Kühlung und Schmierung einer Bearbeitungsvorrichtung (90) und /oder eines Werkzeuges (94,) und / oder eines Werkstückes, insbesondere für eine kryogene Kühlung und Schmierung eines spanendarbeitendes Werkzeuges und / oder eines spanbearbeiteten Werkstückes, aufweisend eine erste Vorrichtung (10, 11, 50), in der ein technisches Fluid (TF) in einem flüssigen Aggregatzustand bereitgestellt ist, eine zweite Vorrichtung (12, 10, 60), in der das technische Fluid (TF) in einem gasförmigen Aggregatzustand bereitgestellt ist, eine dritte Vorrichtung (20, 21) zum Bereitstellen eines Schmiermittels (SM) in einem aerosolen Zustand, und eine Mischkammer (30), in der die beiden Aggregatzustände des technischen Fluids (TF) mit dem Schmiermittel (SM) mischbar sind.

8. Misch-Vorrichtung nach Anspruch 7, **dadurch gekennzeichnet, dass** die Mischkammer (30) eine Teilmischkammer aufweist, in der ein Vormischen von zwei Bestandteilen des mehrphasigen Kühl- und Schmierstoffes (KSS) aus gasförmigem technischen Fluid (TF), flüssigem technischen Fluid (KM) oder dem Schmiermittel (SM) stattfindet.

9. Misch-Vorrichtung nach wenigstens einem der vorherigen Ansprüche 7 oder 8, **dadurch gekennzeichnet, dass** die Misch-Vorrichtung wenigstens einen Verflüssiger (11, 15) aufweist, der das technische Fluid (TF) von einem gasförmigen in einen flüssigen Aggregatzustand überführt, insbesondere ein Aufbereiter (11, 12, 15), der durch Druckbeaufschlagung des technischen Fluids (TF) das technische Fluid (TF) von einem gasförmigen in einen flüssigen Aggregatzustand (KM) überführt.

10. Misch-Vorrichtung nach wenigstens einem der vorherigen Ansprüche 7 bis 9, **dadurch gekennzeichnet, dass** die Misch-Vorrichtung wenigsten einen Aufbereiter (12) aufweist, der das technische Fluid (TF) von einem flüssigen in einen gasförmigen Aggregatzustand überführt, insbesondere ein Aufbereiter (12), der durch Druckverminderung und / oder Erhitzen des technischen Fluids (TF) das technische Fluid (TF) von einem flüssigen in einen gasförmigen Aggregatzustand (TM) überführt.

11. Misch-Vorrichtung nach wenigstens einem der vorherigen Ansprüche 7 bis 10, **dadurch gekennzeichnet, dass** die Mischvorrichtung wenigstens ein Steuerglied (81) aufweist, das die Mengenbestandteile des Trägermediums (TM), Kühlmediums (KM) und Schmiermittels (SM) zum Ausbilden des mehrphasigen Kühl- und Schmierstoffes (KSS) durch Freigeben, Dosieren und / oder Schließen der Zufuhr der Mengenbestandteile steuert.

12. Bearbeitungsvorrichtung (90) zum spanenden oder umformenden Bearbeiten eines Werkstückes, wobei die Bearbeitungsvorrichtung (90) eine Misch-Vorrichtung nach wenigstens einem der Ansprüche 7 bis 11 zum Herstellen eines mehrphasigen Kühl- und Schmierstoffes (KSS) für eine Kühlung und Schmierung eines Werkzeuges (94) und/oder eines Werkstückes, insbesondere für eine kryogene Kühlung und Schmierung eines spanenden oder umformend arbeitenden Werkzeugs (94) und / oder eines spanend oder umformend bearbeiteten Werkstückes, aufweist.

13. Bearbeitungsvorrichtung (90) nach Anspruch 12, **dadurch gekennzeichnet, dass** die Bearbeitungsvorrichtung (90) eine Spindel (92) und eine Mischkammer (30) aufweist, wobei die Mischkammer in der Spindel, vor der Spindel oder separat zur Bearbeitungsvorrichtung (90) ausgebildet ist.

14. Mehrphasiger Kühl- und Schmierstoff (KSS) für eine Kühlung und Schmierung eines Werkzeuges (94) und/oder eines Werkstückes, insbesondere für eine kryogene Kühlung und Schmierung einer spanenden oder umformend arbeitenden Bearbeitungsvorrichtung (90) und / oder eines spanend oder umformend bearbeiteten Werkstückes, insbesondere ein mehrphasiger Kühl- und Schmierstoff (KSS), der nach dem Verfahren nach wenigstens einem der Ansprüche 1 bis 6 hergestellt worden ist.

## Claims

1. Method for generating a multi-phase cooling and/or lubricant material (KSS) for cooling and lubricating a tool (94) and/or a workpiece, in particular for kyrogenic cooling and lubricating of a machining device (90) operating by cutting or forming and/or a workpiece machined by cutting or forming, wherein a technical fluid (TF) is brought or provided in a plurality of different aggregate states (TM, KM) and is mixed with a lubricant (SM) to form the multi-phase cooling and lubricant material (KSS),
wherein the technical fluid (TF) in the liquid aggregate state acts as cooling medium (KM) and the technical fluid in the gaseous aggregate state acts as carrier medium (TM) of the lubricant (SM) and the cooling medium (KM),
**characterized in that** the cooling medium (KM) is brought into a preferably aerosol state and the lubricant (SM) is brought into an aerosol state and are mixed with each other by the lubricant (SM) being introduced into the flow of the gaseous carrier medium (TM) .

2. Method according to claim 1, **characterized in that** the lubricant (SM) is introduced into the flow of the gaseous carrier medium (TM) under high-pressure application, as aerosol, in a liquid aggregate state and/or in a gaseous aggregate state.

3. Method according to at least one of the preceding claims 1 or 2, **characterized in that** the lubricant (SM) is introduced before, during or after mixing the gaseous carrier medium (TM) with the liquid cooling medium (KM).

4. Method according to one of the preceding claims 1 to 3, **characterized in that** the respective mixing quantity proportions of the carrier medium (TM), the cooling medium (KM) and the lubricant (SM) are predetermined variables or are set by means of a programmable logic controller or regulation, in particular the programmable logic controller of a computer (80), taking into account predetermined process parameters, in particular process parameters of the machining device (90) of the tool (94) and/or of the workpiece to be machined.

5. Method according to at least one of claims 1 to 4, **characterized in that** the technical fluid is converted by means of control or regulation of the pressure and/or the temperature of the technical fluid (TF) into the respective gaseous and liquid aggregate state (KM, TM) taking into account a temperature.

6. Method according to at least one of the preceding claims 1 to 5, **characterized in that** the cooling and lubricating of the tool (94) and/or workpiece to be machined is effected partially or completely outside and/or inside the tool (94) or the machining unit (90) by supplying the multi-phase cooling and lubricant material (KSS).

7. Mixing device for generating a multi-phase cooling and lubricant material (KSS), which has been generated according to at least one of claims 1 to 6 for cooling and lubricating a machining device (90) and/or a tool (94) and/or a workpiece, in particular for kyrogenic cooling and lubricating of a metal-cutting tool and/or a machined workpiece, comprising a first device (10, 11, 50) in which a technical fluid (TF) is provided in a liquid aggregate state, a second device (12, 10, 60) in which the technical fluid (TF) is provided in a gaseous aggregate state, a third device (20, 21) for providing a lubricant (SM) in an aerosol state, and a mixing chamber (30) in which the two aggregate states of the technical fluid (TF) are miscible with the lubricant (SM).

8. Mixing device according to claim 7, **characterized in that** the mixing chamber (30) comprises a partial mixing chamber in which a premixing of two components of the multi-phase cooling and lubricant material (KSS) from gaseous technical fluid (TF), liquid technical fluid (KM) or the lubricant (SM) takes place.

9. Mixing device according to at least one of the preceding claims 7 or 8, **characterized in that** the mixing device comprises at least one condenser (11, 15) which converts the technical fluid (TF) from a gaseous to a liquid aggregate state, in particular a conditioner (11, 12, 15) which converts the technical fluid (TF) from a gaseous to a liquid aggregate state (KM) by applying pressure to the technical fluid (TF).

10. Mixing device according to at least one of the preceding claims 7 to 9, **characterized in that** the mixing device comprises at least one conditioner (12) which converts the technical fluid (TF) from a liquid to a gaseous aggregate state, in particular a conditioner (12) which converts the technical fluid (TF) from a liquid to a gaseous aggregate state (TM) by pressure reduction and/or heating of the technical fluid (TF).

11. Mixing device according to at least one of the preceding claims 7 to 10, **characterized in that** the mixing device comprises at least one control member (81) which controls the quantity constituents of the carrier medium (TM), cooling medium (KM) and lubricant (SM) for forming the multi-phase cooling and lubricant material (KSS) by releasing, dosing and/or closing the supply of the quantity constituents.

12. Machining device (90) for machining a workpiece by cutting or forming, wherein the machining device (90) comprises a mixing device according to at least one of claims 7 to 11 for generating a multi-phase cooling and lubricant material (KSS) for cooling and lubricating a tool (94) and/or a workpiece, in particular for kyrogenic cooling and lubricating of a tool (94) operating by cutting or forming and/or a workpiece machined by cutting or forming.

13. Machining device (90) according to claim 12, **characterized in that** the machining device (90) comprises a spindle (92) and a mixing chamber (30), wherein the mixing chamber is formed in the spindle, in front of the spindle or separately from the machining device (90).

14. Multiphase cooling and lubricant material (KSS) for cooling and lubricating a tool (94) and/or a workpiece, in particular for kyrogenic cooling and lubricating of a machining device (90) operating by cutting or forming and/or a workpiece machined by cutting or forming, in particular a multiphase cooling and lubricant material (KSS), which has been produced according to the method according to at least one of claims 1 to 6.

## Revendications

1. Procédé de production d'une substance de refroidissement et/ou de lubrification multi-phases (KSS) pour un refroidissement et une lubrification d'un outil (94) et/ou d'une pièce d'oeuvre, notamment pour un refroidissement cryogénique et une lubrification d'un dispositif d'usinage (90) travaillant par enlèvement de copeaux ou par formage, et/ou d'une pièce d'oeuvre usinée par enlèvement de copeaux ou par formage, procédé d'après lequel un fluide technique (TF) est amené ou fourni selon plusieurs états physiques différents (TM, KM) et est mélangé à un agent de lubrification (SM) pour former la substance de refroidissement et de lubrification multi-phases (KSS), et
d'après lequel le fluide technique agit, dans l'état physique liquide, en tant qu'agent de refroidissement (KM), et le fluide technique agit, dans l'état physique gazeux, en tant qu'agent porteur (TM) de l'agent de lubrification (SM) et de l'agent de refroidissement (KM),
**caractérisé en ce que** l'agent de refroidissement (KM) est amené dans un état de préférence d'aérosol, et l'agent de lubrification (SM) est amené dans un état d'aérosol, et les deux sont alors mélangés mutuellement grâce au fait que l'agent de lubrification (SM) est introduit dans le flux d'écoulement de l'agent porteur (TM) sous forme gazeuse.

2. Procédé selon la revendication 1, **caractérisé en ce que** l'agent de lubrification (SM) est introduit dans le flux d'écoulement de l'agent porteur (TM) sous forme gazeuse, sous haute pression, en tant qu'aérosol, dans un état physique liquide et/ou dans un état physique gazeux.

3. Procédé selon l'une au moins des revendications précédentes 1 ou 2, **caractérisé en ce que** l'agent de lubrification (SM) est introduit avant, pendant ou après le mélange de l'agent porteur (TM) sous forme gazeuse avec l'agent de refroidissement (KM) liquide.

4. Procédé selon l'une des revendications précédentes 1 à 3, **caractérisé en ce que** les fractions quantitatives de mélange respectives de l'agent porteur (TM), de l'agent de refroidissement (KM) et de l'agent de lubrification (SM), sont des grandeurs prédéterminées, ou bien sont réglées au moyen d'une commande ou régulation programmable, notamment la commande programmable d'un ordinateur (80), en prenant en considération des paramètres de processus prédéterminés, notamment des paramètres de processus du dispositif d'usinage (90), de l'outil (94) et/ou de la pièce d'oeuvre à usiner.

5. Procédé selon l'une au moins des revendications 1 ou 4, **caractérisé en ce que** le fluide technique est transféré, moyennant commande ou régulation de la pression et/ou de la température du fluide technique (TF), dans l'état physique gazeux et liquide respectif (KM, TM) en prenant en considération une température.

6. Procédé selon l'une au moins des revendications précédentes 1 ou 5, **caractérisé en ce que** le refroidissement et la lubrification de l'outil (94) et/ou de la pièce d'oeuvre à usiner, s'effectue par une amenée de la substance de refroidissement et/ou de lubrification multi-phases (KSS), partiellement ou en totalité à l'extérieur et/ou à l'intérieur de l'outil (94) ou de l'unité d'usinage (90).

7. Dispositif mélangeur pour la fabrication d'une substance de refroidissement et/ou de lubrification multi-phases (KSS), qui a été produite conformément à l'une au moins des revendications 1 à 6, pour un refroidissement et une lubrification d'un dispositif d'usinage (90) et/ou d'un outil (94) et/ou d'une pièce d'oeuvre, notamment pour un refroidissement cryogénique et une lubrification d'un outil travaillant par enlèvement de copeaux, et/ou d'une pièce d'oeuvre usinée par enlèvement de copeaux, l'ensemble comprenant un premier dispositif (10, 11, 50) dans lequel est fourni et préparé un fluide technique (TF) dans un état physique liquide, un deuxième dispositif (12, 10, 60) dans lequel le fluide technique (TF) est fourni et préparé dans un état physique gazeux, un troisième dispositif (20, 21) pour fournir et préparer un agent de lubrification (SM) dans un état d'aérosol, et une chambre de mélange (30) dans laquelle les deux états physiques du fluide technique (TF) peuvent être mélangés à l'agent de lubrification (SM).

8. Dispositif mélangeur selon la revendication 7, **caractérisé en ce que** la chambre de mélange (30) présente une chambre de mélange partielle dans laquelle a lieu un prémélange de deux constituants de la substance de refroidissement et/ou de lubrification multi-phases (KSS), à savoir du fluide technique (TF) sous forme gazeuse, du fluide technique liquide (KM) ou de l'agent de lubrification (SM).

9. Dispositif mélangeur selon l'une au moins des revendications précédentes 7 ou 8, **caractérisé en ce que** le dispositif mélangeur comprend au moins un liquéfacteur (11, 15), qui convertit le fluide technique (TF) d'un état physique gazeux à un état physique liquide, notamment un dispositif de préparation (11, 12, 15) qui, par sollicitation en pression du fluide technique (TF), convertit le fluide technique (TF) d'un état physique gazeux à un état physique liquide (KM).

10. Dispositif mélangeur selon l'une au moins des revendications précédentes 7 à 9, **caractérisé en ce que** le dispositif mélangeur comprend au moins un dispositif de préparation (12), qui convertit le fluide technique (TF) d'un état physique liquide à un état physique gazeux, notamment un dispositif de préparation (12) qui, par réduction de pression et/ou échauffement du fluide technique (TF), convertit le fluide technique (TF) d'un état physique liquide à un état physique gazeux (TM).

11. Dispositif mélangeur selon l'une au moins des revendications précédentes 7 à 10, **caractérisé en ce que** le dispositif mélangeur comprend au moins un organe de commande (81), qui commande les fractions quantitatives de l'agent porteur (TM), de l'agent de refroidissement (KM) et de l'agent de lubrification (SM) pour former la substance de refroidissement et de lubrification multi-phases (KSS), par ouverture, dosage et/ou fermeture de l'amenée des fractions quantitatives.

12. Dispositif d'usinage (90) pour l'usinage par enlèvement de copeaux ou par formage d'une pièce d'oeuvre, le dispositif d'usinage (90) comprenant un dispositif mélangeur selon l'une au moins des revendications 7 à 11 pour la fabrication d'une substance de refroidissement et de lubrification multi-phases (KSS), pour un refroidissement et une lubrification d'un outil (94) et/ou d'une pièce d'oeuvre, notamment pour un refroidissement cryogénique et une lubrification d'un outil (94) travaillant par enlèvement de copeaux ou par formage, et/ou d'une pièce d'oeuvre usinée par enlèvement de copeaux ou par formage.

13. Dispositif d'usinage (90) selon la revendication 12, **caractérisé en ce que** le dispositif d'usinage (90) comprend une broche (92) et une chambre de mélange (30), la chambre de mélange étant formée dans la broche, devant la broche, ou bien de manière séparée du dispositif d'usinage (90).

14. Substance de refroidissement et de lubrification multi-phases (KSS) pour un refroidissement et une lubrification d'un outil (94) et/ou d'une pièce d'oeuvre, notamment pour un refroidissement cryogénique et une lubrification d'un dispositif d'usinage (90) travaillant par enlèvement de copeaux ou par formage, et/ou d'une pièce d'oeuvre usinée par enlèvement de copeaux ou par formage, notamment une substance de refroidissement et de lubrification multi-phases (KSS), qui a été fabriquée d'après le procédé selon l'une au moins des revendications 1 à 6.
